# FASCICULE DE BREVET EUROPEEN

(11) **EP 0 466 621 B1**
(45) Date de publication et mention de la délivrance du brevet: **30.11.1994**
(21) Numéro de dépôt: 91430016.5
(22) Date de dépôt: 19.06.1991
(51) Int. Cl.: A01G 13/00

(54) **Procédé de protection de container utilisé en pépinière et horticulture, machine à cet effet et container ainsi protégé**
Verfahren zum Schützen von Behältern für Pflanzschule und Gartenbau, zugehörige Maschine und so geschützter Behälter
Method for protecting container used in plant-nursery and horticulture, machine therefor and container protected thereby

(30) Priorité: 21.06.1990 FR 9007919; 26.10.1990 FR 9013682
(43) Date de publication de la demande: 15.01.1992
(73) Titulaire: Frances, Robert, F-34120 - Pezenas (FR)
(72) Inventeur: Frances, Robert, F-34120 - Pezenas (FR)
(74) Mandataire: Moretti, René

(56) Documents cités:
- FR-A- 2 146 516
- FR-A- 2 562 033
- FR-A- 2 606 364
- FR-A- 2 633 803
- US-A- 3 501 896
- US-A- 3 940 884

## Description

La présente invention a pour objet un procédé de protection de container utilisé en pépinière et horticulture, machine à cet effet et container ainsi protégé.

Le secteur technique de l'invention est le domaine de la culture des plantes en pépinières ou en horticulture hors sol.

Une des applications principales de l'invention est de réaliser des containers pour les cultures ci-dessus et des machines de fabrication ou plutôt de protection de ces containers car l'enveloppe ou le pot formant ceux-ci est fabriqué et rempli de terre ou de substrat par d'autres machines et suivant des opérations indépendantes et préalables aux opérations de la présente invention.

Lesdits containers utilisés dans le domaine ci-dessus sont souvent constitués de pots de forme cylindro-conique ou autre, généralement mais pas exclusivement en matière synthétique du genre PVC.

Ces pots sont remplis à grande cadence par une machine empoteuse qui distribue à chacun d'eux une dose de terre ou tout autre substrat. La cadence de ces machines est de l'ordre de 1.000 1.200 pots à l'heure. En aval de cette machine empoteuse de tout type connu, les pots reçoivent les plantations puis sont dirigés vers des aires de stockage pendant la période de culture et de croissance.

Pendant cette période, les plantes doivent subir différents traitements tels que désherbage manuel ou chimique, apport d'engrais et arrosage.

Les opérations de désherbage chimique sont couteuses de même que le désherbage manuel.

Pour éviter ces opérations il est connu que les pépiniéristes et horticulteurs posent sur les pots ou containers, au-dessus de la terre ou du substrat qui enrobe les racines, et autour de la tige de la plante ou de l'arbuste, des caches protecteurs : un exemple de cache est décrit dans le brevet FR 2146516 (LEFEUVRE Albert) qui précise que de tels caches peuvent être constitués par une feuille de matière déformable en général de matière plastique et qui présente une ouverture centrale reliée au contour du cache épousant la forme du pot ou container par une fente continue pour y engager la tige lors de la mise en place de ces caches.

Ceux-ci alors, d'une part, empêchent les herbes de se développer et d'autre part s'opposent à une évaporation trop rapide des eaux d'arrosage. Divers matériaux peuvent être utilisés pour la réalisation de ces caches et de préférence à ce jour on utilise, conjointement ou non avec un cadre de maintien, des feuilles en toile perméable à l'air et à l'eau de type textile tissé ou non, tricoté ou non, ou de film microperforé tel que décrit dans la demande de brevet 2633803 du 7 Juillet 1988 (Sté HOLZSTOFF) sur un agrotextile composite et ses applications.

L'inconvénient de ces systèmes de mise en place de cache est qu'il nécessite toujours une mise en oeuvre manuelle alors que toutes les opérations de remplissage de terre dans les containers, de réalisation d'évidement au centre de la terre empotée et de plantation dans cet évidement, d'une motte calibrée ou non, contenant des racines et de laquelle dépasse la tige d'une plante ou d'un arbuste, peuvent et sont pour la plupart, et au moins pour les deux premières, réalisées généralement sur des machines automatiques à grande cadence comme indiqué précédemment soit 1.000 à 1.200 pots à l'heure. En effet aucun système automatisé assez simple ne permet à ce jour de tenir compte de toutes les formes et tailles de tige pour placer un cache par-dessus sans risque d'abîmer celle-ci et cela d'autant plus que si l'on veut suivre la même cadence que la machine empoteuse située en amont.

Le problème posé est donc de pouvoir mettre en place un cache sur tout container, rempli de substrat ou de terre, et apte à recevoir une plantation, de telle façon qu'au moins les opérations nécessaires pour l'empotage et la protection de la surface du substrat puissent être réalisées d'une manière automatique à forte cadence et permettre de supprimer toute opération manuelle, ou tout au moins de réduire leur coût, en particulier et également pour l'opération de plantation ; et cela doit pouvoir être effectué quelles que soient les caractéristiques de ladite plante ou plantation.

Un autre but de l'invention est d'apporter une croissance satisfaisant des plantes avec un apport d'eau réduit, ce qui réalise une économie sensible mais également évite un lessivage du substrat préjudiciable à l'action des engrais dont il est de ce fait possible de réduire l'apport.

Une solution au problème posé est un procédé de protection de container utilisé en pépinières et horticulture présentant une ouverture supérieure pour son remplissage par de la terre ou tout autre substrat, dans laquelle est réalisé un évidement permettant de recevoir une plantation et protégé par la mise en place d'un cache, tel qu'avant la mise en place de ladite plantation et après remplissage et réalisation dudit évidement :
- on fixe solidairement sur ladite ouverture une toile perméable à l'eau et à l'air fermant celle-ci et assurant ladite protection par cache dudit substrat,
- on perfore suivant des dimensions réglables et données en fonction de ladite plantation ladite toile au centre de ladite ouverture,
- on peut alors planter à tout moment ultérieurement après les opérations précédentes ladite plantation dans l'évidement se trouvant alors sous ladite toile et à travers ladite perforation.

Dans un mode préférentiel de réalisation on dispense, préalablement à l'opération de fixation, ladite toile à partir d'une bande en rouleau qu'on déroule dans une direction donnée au-dessus dudit container et que l'on coupe après l'opération de fixation derrière ledit container pour la désolidariser de celui-ci.

De plus et de préférence on entraîne les uns derrière les autres plusieurs desdits containers par tout moyen sous ladite bande de toile et dans la même direction que son déroulement pour y fixer ladite toile, la perforer et la couper suivant les mêmes opérations successives de procédé pour chaque container que précédemment. Toutes les opérations peuvent alors avoir lieu simultanément sur plusieurs containers à la fois, l'ensemble de ceux-ci étant alors déplacés d'un poste opératoire au suivant en même temps.

Un autre objectif de l'invention est obtenu en choisissant une toile de protection en matériau textile non tissé, et tel que le container et ladite toile sont en matériaux thermofusibles de telle sorte que ladite toile est thermocollée sur ledit container.

Le résultat est de nouveaux procédés de protection de containers utilisés en pépinières et horticulture ainsi que de nouvelles machines permettant de réaliser un tel procédé, et de nouveaux containers ainsi protégés.

En effet, la principale caractéristique essentielle de la présente invention est de pouvoir mettre en place toute plante après la réalisation de la protection du container tel qu'indiqué dans les procédés de l'invention, et non pas, comme à ce jour, avant la mise en place d'un cache ; ainsi, il est possible suivant la présente invention de faire passer l'ensemble des containers sur des machines automatiques telles que décrites précédemment et ci-après, pour fixer la toile de protection à une cadence équivalente à celle des machines d'empotage, soit de l'ordre de 1.000 à 1.200 pots à l'heure environ. En effet, les containers remplis de substrat peuvent passer dans de telles machines et sous la toile se déroulant sur ces containers pour y être fixée sans risque de détérioration de la plante qui est mise ultérieurement alors que suivant les procédés connus actuels il n'est bien sûr pas possible de faire passer des containers contenant déjà lesdites plantes sous des machines de mise en place de cache. De plus, une fois la toile de protection mise en place il est possible d'envisager un poste de mise en place de la plante elle-même par un automate puisque la perforation du cache et l'empreinte prévue, dans le substrat en dessous de la perforation, étant situées exactement au centre de l'ouverture du container il est possible de pouvoir y placer d'une manière automatique et répétitive une motte d'une plante quelconque après les opérations décrites dans la présente invention.

D'autres intérêts peuvent être relevées dans celle-ci, tels que :
- le cache n'est perforé qu'en son centre et autour de la tige qui en poussant va pratiquement occuper toute la surface de ladite perforation empêchant ainsi tout ruissellement d'apport d'eau externe ou au contraire d'évaporation de l'eau située en dessous alors que dans les caches actuels ayant en plus une fente continue jusqu'au bord du pot, et une étanchéité périphérique peu sûre ou non fixée, cette protection au ruissellement et à l'évaporation n'est pas aussi efficace que dans la présente invention.
- De plus, il peut être envisagé d'effectuer l'opération de plantation proprement dite au travers de ce cache perforé lors d'opérations ultérieures décalées dans le temps et/ou dans l'espace même s'il est préférable pour éviter un effondrement de l'empreinte réalisée sous ladite perforation de faire ladite plantation peu de temps après les opérations prévues dans la présente description.
- On peut citer dans une réalisation préférentielle l'utilisation de toile et de container thermofusibles et compatibles entre eux, qui permet de réaliser l'opération de fixation de ladite toile sur le container d'une manière rapide, efficace au point de vue étanchéité et compatible avec les objectifs de l'invention.
- Enfin, on peut souligner le choix préférentiel de toile en matériau non tissé de façon à faciliter et permettre les échanges gazeux entre le volume prisonnier sous ledit cache et l'atmosphère ambiant alors que beaucoup d'autres matériaux utilisés et cités dans d'autres brevets ou descriptifs prévoit l'utilisation d'autres types de toile mais dont l'efficacité est moindre et n'est pas optimisée.

On pourrait citer d'autres avantages à la présente invention mais ceux cités ci-dessus en ont déjà suffisamment pour en démontrer leur nouveauté et leur intérêt. La description et les figures ci-après représentent un exemple de réalisation de l'invention mais n'ont aucun caractère limitatif : d'autres réalisations sont possibles à partir des revendications qui précisent la portée et l'étendue de cette invention en particulier en changeant la forme de base des pots ou des containers par exemple.

La figure 1 est une vue d'un container réalisé par mise en oeuvre des moyens de l'invention.

La figure 2 est une vue schématique de la machine selon l'invention.

La figure 3 est une représentation schématique des différents stades opératoires en vue de dessus.

La figure 4 est une vue en coupe partielle d'un container rélisé selon l'invention.

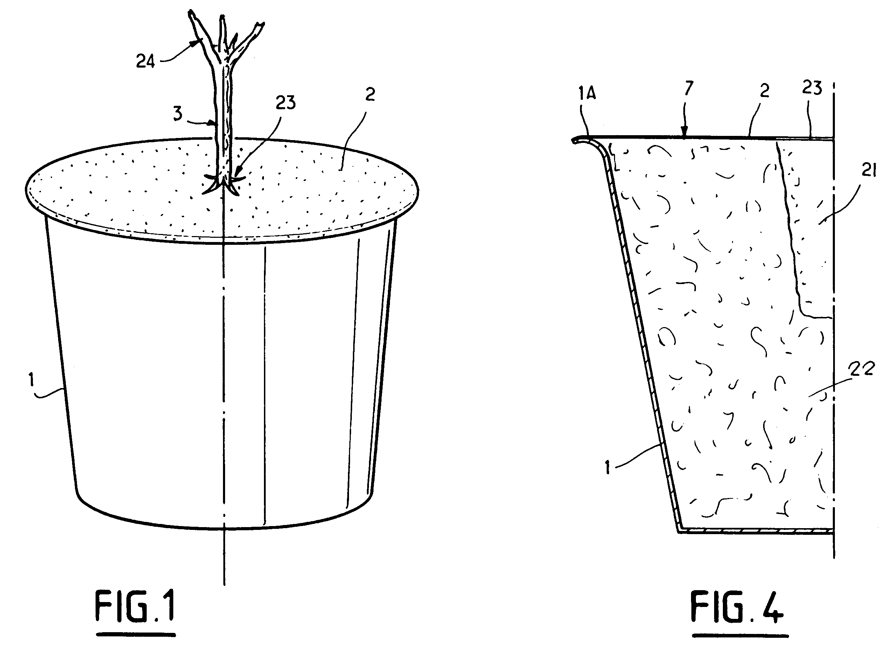

Tel que représenté en figures 1 et 4, le container selon l'invention est constitué d'un pot 1, par exemple de forme cylindro-conique, qui est rempli par un substrat 22 dans lequel est réalisé un évidement 21 permettant de recevoir une plantation 24, et dont l'ouverture supérieure 2 est obturée par un cache 7.

Dans et suivant la présente invention ledit container 1 est caractérisé en ce que ledit cache est une toile 7 perméable à l'eau et à l'air, perforée uniquement en et au voisinage du centre de l'ouverture 2 du container 1, fixée sur ladite ouverture 2, et au travers de laquelle dite perforation 23 la plantation 24 est mise en place dans l'évidement 21 de telle façon que la tige 3 de cette plantation dépasse de ladite toile 7 et est entourée sur toute sa circonférence et d'une manière continue par celle-ci.

Sur la figure 4 la toile 7 présente en son centre une perforation 23 qui de préférence est en forme de croix, constituée par exemple de deux fentes croisées dont les longueurs correspondent environ au diamètre de l'évidement 21 réalisé dans le substrat 22 ; les dimensions de cette perforation et dudit évidement sont réglées et adaptées à la dimension de la motte de terre contenant les racines du plant 24 qui est prévu d'y être planté ultérieurement : après cette mise en place du plant 24 tel que représenté sur la figure 1, les bords de la perforation 23 s'étant ouverts, recourbés et déformés élastiquement lors du passage de la motte, peuvent de par l'élasticité de la toile se relever et venir enserrer la circonférence de la tige 3 du plant 24 et cela d'autant plus que ladite tige va augmenter de diamètre au cours de la croissance de la plante.

Préférentiellement le pot utilisé pour réaliser le container selon l'invention est un pot 1 à section cylindrique de forme conique mais il peut être de toute autre forme adaptée.

Comme représenté en vue partielle à la figure 4, le bord supérieur du pot 1 est retourné suivant un arc-de-courbe 1A.

Le pot utilisé peut être réalisé en une matière synthétique du type PVC ou tout autre matériau synthétique thermofusible.

La toile 7 utilisée est selon une forme préférée de réalisation une toile conditionnée en bande et en rouleau, à partir d'un matériau opaque à la lumière solaire, de préférence noir.

La toile est perméable à l'air et à l'eau, ce qui permet l'apport d'air nécessaire au substrat et l'apport d'eau par arrosage.

L'opacité de la toile à la lumière solaire va empêcher le développement sur le substrat 22 des végétations non désirées sans qu'il soit nécessaire de procéder à un désherbage chimique ou manuel, hormis dans la partie de la surface du substrat qui sera, du fait de l'ouverture de passage de la plante, à l'air libre ; comme indiqué précédemment cette ouverture est réduite au minimum alors que dans les systèmes actuels la fente qui relie cette ouverture au bord du pot augmente la surface éventuellement nécessaire à désherber.

De préférence, la toile 7 utilisée est une toile en fibre de textile synthétique et thermofusible non tissée.

L'intérêt d'utiliser une toile en un matériau textile constitué de fibres est d'obtenir lors de l'arrosage par rampe ou jets une absorption des gouttes d'eau par la toile à travers laquelle le container 1 est alimenté.

On peut également concevoir que la toile utilisée 7 soit réalisée à partir d'un matériau textile synthétique tissé, ledit matériau étant thermofusible et ladite toile étant perméable à l'air et à l'eau.

De même, la toile utilisée peut être, sans sortir du cadre de l'invention, une toile en un matériau synthétique thermofusible non textile, par exemple une feuille de nylon ou de PVC, mais dotée de micro-perforations la rendant perméable à l'air et à l'eau.

La fixation de la toile peut être obtenue par thermocollage. A cet effet, conjointement à un application en pression sur les bords (1a) de l'orifice supérieur (2) du pot (1) est réalisée une opération de chauffage par des moyens énoncés dans la description qui suit de la machine selon l'invention.

Avantageusement, la température de fusion de la toile (7) est supérieure à celle des bords du pot (1) en sorte que la toile s'intègre dans le bord dudit pot. Le thermocolage est réalisé dans un temps très court, de l('ordre de deux secondes afin de ne pas détériorer les pots, qui doivent résister à la pression exercée pour l'application en pression ou tension de la toile (7).

Cette différence de température de fusion et de thermocollage de la toile par rapport au pot peut résulter de la nature de la matière synthétique utilisée et/ou aussi de sa faible épaisseur par rapport à la section de la paroi supérieure du pot.

On peut également sans sortir du cadre de l'invention réaliser un container par utilisation d'un pot (1) qui ne soit pas en un matériau synthétique thermofusible, par exemple un pot en terre cuite ou un pot en un matériau biodégradable tel que des particules de bois comprimées et agglomérées.

Selon cette forme de réalisation la fixation de la toile 7 est réalisée par utilisation entre la toile et le bord du pot 1 d'une colle thermocollante et/ou thermofusible : par exemple le rebord supérieur du pot peut être enduit d'une telle colle et la toile utilisée, perméable à l'air et à l'eau peut être ou non thermofusible ou thermocollante, ou enduite sur sa face en regard du pot d'une matière ayant cette propriété.

La fixation de la toile 7 sur le pot 1 par thermocollage est avantageuse tant au niveau de la rapidité d'exécution de l'opération qu'au niveau de la solidité de la fixation obtenue et de la garantie d'étanchéité.

On peut cependant concevoir que tout autre type de fixation soit utilisé, par exemple un collage sur la section du bord du pot ou sur le pourtour extérieur dudit bord du pot. Toutes les fixations envisageables doivent cependant assurer une liaison solidaire pour garantir un bon maintien dans le temps durant la pousse des plantations pour garder l'efficacité de cache, ce qui n'est pas assuré à ce jour par les systèmes de cache posés après la plantation et souvent non fixés solidairement pour des questions de temps d'opération.

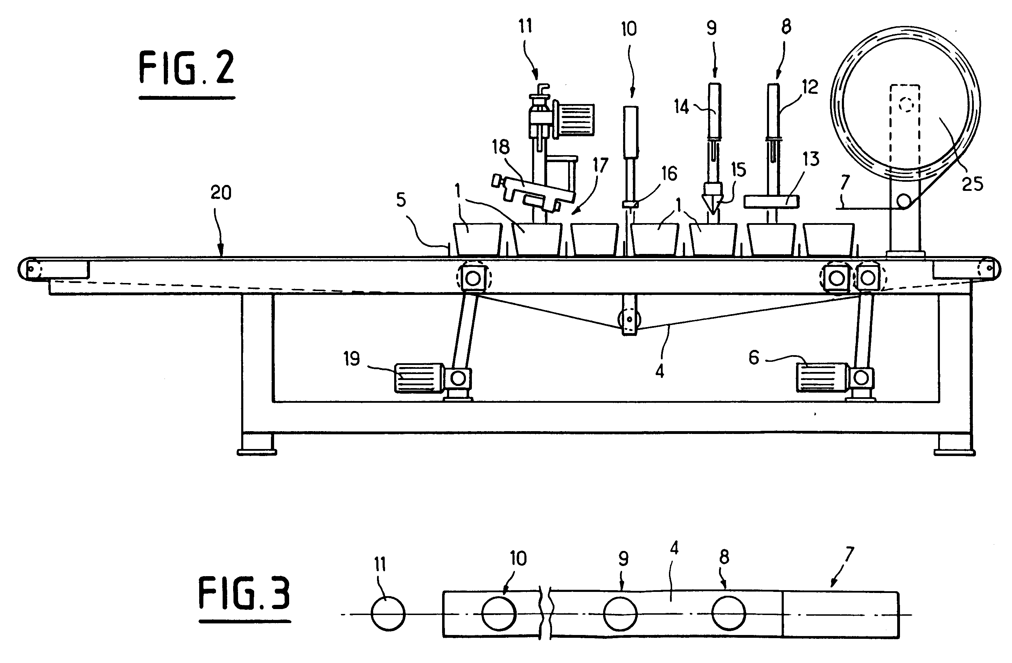

En figure 2 est représentée une vue schématique de la machine selon l'invention et en figure 3 sont représentées en vue de dessus de manière schématique, les différentes opérations effectuées.

Ladite machine, telle qu'indiquée précédemment, est dite de fabrication ou plutôt de protection des containers 1 utilisés en pépinières et en horticulture présentant une ouverture supérieure pour son remplissage par de la terre ou tout autre substrat réalisé en amont de ladite machine et dans laquelle on réalise un évidement permettant de recevoir une plantation, mise en place postérieurement en aval de ladite machine.

Celle-ci, conformément à la présente invention, comporte au moins, avant toute opération pour la mise en place de ladite plantation 24 :
- un poste 8 de fixation sur ladite ouverture 2 d'une toile 7 perméable à l'eau et à l'air fermant celle-ci et assurant ladite protection par cache du substrat 22,
- un poste 9 de perforation 23 suivant les dimensions réglables et données en fonction de ladite plantation 24 de ladite toile 7 au centre de la dite ouverture 2
- un système d'alimentation et d'entraînement 4 de plusieurs containers 1 sur une même ligne et passant sous au moins chacun de ces postes 8, 9, sous lesquels les containers sont arrêtés successivement pendant une durée suffisante, grâce à tout moyen connu de temporisation pour permettre chacune des opérations correspondantes,
- un moyen de dégagement 20 desdits containers 1 ainsi protégés et pouvant alors recevoir ultérieurement à tout moment une plantation 24 dans l'évidement 21 se trouvant alors sous ladite toile 7 et à travers ladite perforation 23.

Ledit système d'alimentation et d'entraînement de containers peut être constitué essentiellement d'une chaîne sans fin 4 avec des taquets 5 entre lesquels sont pris les pots 1.

L'intervalle entre les taquets 5 peut être réglable en fonction des dimensions des pots. Par exemple, pour des pots ou containers 1 de l'ordre de 3 à 4 litres qui sont ceux souvent utilisés dans le domaine concerné, ce réglage peut être donné par un détecteur de proximité sans contact et permettre un avancement de la chaîne 4 à taquets de l'ordre d'un pas à pas de 24 centimètres environ.

Ladite chaîne 4 est actionnée par un moteur 6 commandé par une temporisation en sorte que chacun des pots 1 pris en charge soit arrêté pendant un temps déterminé sous chacun des postes opératoires tels qu'ils sont décrits ci-après. Lorsqu'un pot 1 se présente ainsi à l'entrée de la chaîne 4 à taquets 5 il est alors détecté par un contact : aussitôt la chaîne à taquets avance d'un pas entraînant le pot vers le premier poste opératoire. Après temporisation correspondant à la durée de l'opération de ce premier poste, le second pot est autorisé à entrer dans la chaîne à taquets qui en faisant un nouveau pas entraîne le premier pot sous le poste suivant et ainsi de suite sous l'ensemble des postes opératoires éventuels jusqu'à ce que le premier pot ayant pénétré sur ladite chaîne arrive en sortie de ladite machine sur tout moyen d'entraînement 20, tel qu'un double tapis à courroie avec distribution par un aiguillage de tout type connu. Ce tapis à courroie 20 de sortie peut être entraîné par un moteur 19 d'entraînement et permettre de servir de plan de repiquage pour la mise en place desdits plants 24 dans les perforations des toiles 7 fixées sur lesdits pots ou containers 1 et réalisées dans les postes opératoires analysés ci-dessus.

Sur le bâti de ladite machine selon l'invention est monté un rouleau 25 d'une bande 7 qui est dévidé par tout moyen au-dessus desdits containers 1 et du moyen d'entraînement 4 suivant la même ligne et la même direction d'entraînement ; la machine comprend alors après le poste de perforations 9, un poste de découpage 10 de ladite toile 7 pour en désolidariser les parties alors fixées sur les containers de sa bande d'alimentation 25.

La machine selon l'invention peut comprendre ainsi successivement dans le sens de défilement de la chaîne 4 :
- au moins un poste 8 de fixation de la bande de toile sur l'orifice supérieur des pots 1,
- au moins un poste 9 de perçage de la toile en son centre,
- au moins un poste 10 de sectionnement de la bande de toile,
- au moins un poste 11 de détourage par découpage de la toile 7 excédentaire autour du pot 1 et qui peut être réalisé et réglé exactement à la forme et suivant le contour exact extérieur de l'ouverture supérieure du pot 1.

Le poste 8 de fixation de la toile 7 est constitué par un vérin 12 vertical à mouvement ascendant et descendant, de tout type connu.

A l'extrémité inférieure du vérin 12 vers le pot est fixée une plaque chauffante 13.

La plaque chauffante est maintenue à température souhaitée par des résistances électriques ou des crayons chauffants de tout type connu.

La plaque chauffante a un contour adapté à la section supérieure du pot 1 et dans le type de pot représenté, ce contour est circulaire, son diamètre étant supérieur à celui de l'ouverture du pot.

Par abaissement du vérin 12, la plaque chauffante 13 presse la bande 7 et par thermocollage la fixe sur l'orifice du pot : ceci n'est bien sur possible que si on a choisi un container 1 et une toile 7 en matières thermofusibles donc compatibles entre elles pour pouvoir être collées ou fusionnées entre elles et de préférence dont le point de fusion de la toile 7 est supérieur à celui du container 1, de telle façon que ladite toile 7 s'intègre dans le bord de celui-ci par pression conjointement audit échauffement dans un temps très court par exemple deux secondes, de telle sorte que le thermocollage de l'ensemble soit réalisé sans déformation du bord extérieur du pot.

Dans l'exemple de réalisation de l'invention représenté à la figure 4 la fixation par thermo-soudage de la toile 7 s'effectue sur le sommet du rebord 1A arrondi en arc-de-courbe du pot 1.

Le poste 9 de perçage de la bande de toile peut être constitué d'un vérin 14 vertical mobile de haut en bas qui porte à son extrémité un couteau 15.

Lors de l'arrêt du pot sur lequel la bande de toile a été précédemment fixée, sous le poste 9 par abaissement du vérin 14, le couteau 15 perce la toile tendue sur le pot 1.

De préférence le couteau 15 est constitué de deux lames triangulaires orthogonales qui découpent au centre de la toile obturant le pot, une croix permettant le passage ultérieur du plant 24.

Le poste 10 suivant est constitué d'un fil chauffant 16 transversal à la bande 7 qui est monté sur un cadre porté par un vérin vertical mobile de haut en bas.

Le fil chauffant est abaissé après le passage de chacun des pots en sorte de désolidariser le pot, ayant subi les opérations des postes 8 et 9, de la bande 7.

L'actionnement du poste 10 est synchronisé par temporisation avec le fonctionnement du poste 8 en sorte que la bande 7 soit toujours en tension.

Le poste 11 de détourage qui a pour fonction de découper l'excédent de la bande 7 autour du pot peut être constitué par une fraise 17 actionnée de toute manière connue, par exemple pneumatique portée par un plateau rotatif 18 en bout d'un vérin vertical de monte et baisse.

Le plateau 18 peut être incliné en bout de son vérin support en sorte que la fraise 17 vienne tangentiellement au bord en arc-decourbe du pot et que le détourage s'effectue sur le côté externe dudit rebord.

Par abaissement du vérin et du plateau 18, la fraise vient au contact de la bande excédentaire et la découpe autour du pot.

Entre le poste de perçage 9 et le poste de détourage 11 peut être intercalé sur la machine un vérin mobile de haut en bas et pourvu en bout de sa tige d'un cône ou de toute autre forme qui passe par l'ouverture en croix de la toile et ménage alors à ce moment ledit évidement 21 dans le substrat 22 tel que représenté dans la figure 4.

Cette forme de réalisation de l'invention n'est pas représentée pour simplifier la figure 2 mais il peut être également envisagé que ce soit le couteau 15 du poste de perforation 9 qui comporte sur le support desdits couteaux une forme qui permette de réaliser ledit cône d'évidement 21 : les lames constituant ledit couteau 15 dépassent alors de cette forme pour en permettre le passage à travers la toile 7 et son enfoncement dans le substrat. Cette opération de découpage et de réalisation de l'évidement, dans la machine suivant l'invention, permet d'éviter de faire cette opération préalablement et donc de réduire également le temps global de l'ensemble de l'opération d'empotage, de protection et de mise en place des plants dans lesdits containers 1.

La machine selon l'invention est en effet particulièrement adaptée pour être disposée en aval d'une machine empoteuse qui va suivant une cadence prédéterminée et réglée avec celle de ladite machine selon l'invention distribuer une dose de substrat dans chaque pot 1.

En aval de la machine selon l'invention, les containers réalisés recevront un plant introduit à travers l'ouverture 23 de la paroi supérieure 7 dont ils sont dotés de façon à obtenir un container prêt à la pousse du plant, ainsi introduit dans le container 1 tel que représenté sur la figure 1 : ces containers sont ensuite commercialisés quand le plant a atteint une taille satisfaisante et vendus sans autre opération, directement aux consommateurs.

Cette machine suivant l'invention, constituée d'une chaîne à taquets et au moins de trois ou quatre postes automatiques de travail tels que décrits précédemment, peut être gérée par un programmateur et permettre ainsi d'assurer le débit de 1.000 à 1.200 pots à l'heure mais on peut envisager une cadence supérieure, bien que cela ne soit pas trop nécessaire puisque ces cadences sont compatibles avec celles des autres machines de rempotage utilisées par la profession à ce jour.

La cadence ci-dessus peut être réalisée grâce au procédé et/ou à la machine décrits précédemment suivant l'invention, qui comporte en particulier une opération de thermocollage de toile non tissée sur lesdits containers de pépinières et d'horticulture, caractérisé par le principe du travail en chaîne en quatre postes différents tels que le collage 8 de la toile, le découpage en croix de celle-ci, le découpage au carré pour séparer ladite toile de la bande d'alimentation et le détourage de celle-ci avec simultanéité de ces quatre opérations sur ou entre quatre ou cinq pots situés sur ladite chaîne de travail.

## Revendications

1. Procédé de protection de container (1) utilisé en pépinières et horticulture présentant une ouverture supérieure (2) pour son remplissage par de la terre ou tout autre substrat (22), dans laquelle est réalisé un évidement (21) permettant de recevoir une plantation (24) et protégé par la mise en place d'un cache, caractérisé en ce qu'avant la mise en place de ladite plantation (24) et après remplissage, et réalisation dudit évidement :
- on fixe solidairement sur ladite ouverture (2) une toile (7) perméable à l'eau et à l'air fermant celle-ci et assurant ladite protection par cache dudit substrat (22)
- on perfore (23) suivant des dimensions, réglables et données en fonction de ladite plantation, ladite toile (7) au centre de ladite ouverture (2)
- on plante à tout moment, ultérieurement après les opérations précédentes, ladite plantation (24) dans l'évidement (21) se trouvant alors sous ladite toile (7) et à travers ladite perforation (23).

2. Procédé de protection de container suivant la revendication 1 caractérisé en ce qu'on dispense, préalablement à l'opération de fixation, ladite toile (7) à partir d'une bande en rouleau (25) qu'on déroule dans une direction donnée au-dessus dudit container (1) et que l'on coupe après l'opération de fixation derrière ledit container (1) pour la désolidariser de celui-ci.

3. Procédé de protection de container suivant la revendication 2 caractérisé en ce qu'on entraîne les uns derrière les autres plusieurs desdits containers (1) par tout moyen (4) sous ladite bande de toile (25) et dans la même direction que son déroulement pour y fixer ladite toile, la perforer et la couper suivant les mêmes opérations successives de procédé pour chaque container que dans la première revendication, toutes les opérations pouvant alors avoir lieu simultanément sur plusieurs containers à la fois, l'ensemble de ceux-ci étant alors déplacés d'un poste opératoire au suivant en même temps.

4. Procédé suivant l'une quelconque des revendications 1 à 3 caractérisé en ce qu'on fixe ladite toile (7) sur le container (1) par thermocollage.

5. Procédé suivant la revendication 4 caractérisé en ce que l'on choisit un container (1) et une toile (7) en matière thermofusible, dont le point de fusion de celle-ci est inférieure à celui du container et que l'on fixe ladite toile (7) sur celui-ci par pression, conjointement à un échauffement suffisant pour la thermocoller.

6. Machine de protection de container (1) utilisé en pépinières et horticulture présentant une ouverture supérieure (2) pour son remplissage par de la terre ou tout autre substrat (22), dans laquelle est réalisé un évidement (21) permettant de recevoir une plantation (24) et protégé par la mise en place d'un cache, caractérisé en ce qu'elle comporte au moins, avant tout poste opératoire pour la mise en place de ladite plantation (24),
- un poste (8) de fixation sur ladite ouverture (2) d'une toile (7) perméable à l'eau et à l'air fermant celle-ci et assurant ladite protection par cache du substrat (22),
- un poste (9) de perforation (23), suivant des dimensions réglables et données en fonction de ladite plantation (24), de ladite toile (7) au centre de la dite ouverture (2),
- un système d'alimentation et d'entraînement (4) de plusieurs containers (1) sur une même ligne et passant sous au moins chacun de ces postes (8, 9), sous lesquels les containers sont arrêtés successivement pendant une durée suffisante grâce à tout moyen connu de temporisation, pour permettre chacune des opérations correspondantes,
- un moyen de dégagement (20) desdits containers (1) ainsi protégés et pouvant alors recevoir ultérieurement à tout moment une plantation (24) dans l'évidement (21) se trouvant alors sous ladite toile (7) et à travers ladite perforation (23).

7. Machine de protection de container suivant la revendication 6 caractérisé en ce qu'elle comporte un rouleau (25) à bande de toile (7) qui est dévidé par tout moyen au-dessus desdits containers (1) et du moyen d'entraînement (4) suivant la même ligne et la même direction d'entraînement, et après le poste de perforations (9), un poste de découpage (10) de ladite toile (7) pour en désolidariser les parties alors fixées sur les containers de la bande d' alimentation (25).

8. Container (1) utilisé en pépinières et horticulture présentant une ouverture supérieure (2) pour son remplissage par tout substrat (22) dans lequel est réalisé un évidement (21) permettant de recevoir une plantation (24) et qui est protégé par un cache fixé sur ladite ouverture (2), au moins perforé en et au voisinage de son centre et au travers duquel la tige 3 de la plantation dépasse, caractérisé en ce que cedit cache est une toile (7) perméable à l'air et à l'eau, perforée uniquement, en et au voisinage du centre de l'ouverture (2) du container (1) de telle manière que la tige (3) de cette plantation est entourée sur toute sa circonférence et d'une manière continue par celle-ci.

9. Container selon la revendication 8 caractérisé en ce que ladite toile (7) est en matériau textile non tissé.

10. Container selon l'une quelconque des revendications 7 et 8 caractérisé en ce que le container (1) et ladite toile (7) sont en matériau thermofusibles et, le point de fusion de celle-ci étant inférieure à celui du container (1), ladite toile est thermocollée sur ce dernier sans détérioration de celui-ci.

## Claims

1. Process for protecting a container (1) used in nurseries and horticulture, presenting an upper opening (2) to fill it with earth or any other substrate (22), in which a hollow (21) is made, adapted to receive a plant (24) and protected by the positioning of a cover, characterized in that, before said plant (24) is placed in position and after filling, and production of said hollow:
- there is firmly fixed on said opening (2) a water- and air-permeable sheet (7) closing said opening and ensuring said protection by covering said substrate (22);
- said sheet (7) is perforated (23) at the centre of said opening (2), to dimensions which are adjustable and given as a function of said plant;
- at any moment subsequent to the preceding operations, said plant (24) is planted in the hollow (21) then located beneath said sheet (7), and through said perforation (23).

2. Container protecting process according to Claim 1, characterized in that, prior to the fixing operation, said sheet (7) is dispensed from a roll of web (25) unwound in a given direction above said container (1) and which is cut after the fixing operation behind said container (1) in order to disconnect it therefrom.

3. Container protecting process according to Claim 2, characterized in that a plurality of said containers (1) are driven one behind the other by any means (4) beneath said web of sheet (25) and in the same direction as its unwinding in order to fix said sheet thereon, to perforate it and cut it in the same successive operations for each container as in the first Claim, all the operations then taking place simultaneously on a plurality of containers at a time, the assembly thereof then being displaced from one operational station to the following at the same time.

4. Process according to any one of Claims 1 to 3, characterized in that said sheet (7) is fixed on the container (1) by heat-sealing.

5. Process according to Claim 4, characterized in that a container (1) and sheet (7) made of heat-meltable material are chosen, the melting point of the sheet being lower than that of the container and said sheet (7) is fixed on said container by pressure, jointly with a sufficient heating to heat-seal it.

6. Machine for protecting containers (1) used in nurseries and horticulture presenting an upper opening (2) to fill it with earth or any other substrate (22) in which a hollow (21) is made, adapted to receive a plant (24), and protected by positioning a cover, characterized in that it comprises, before any operational station for positioning said plant (24), at least:
- a station (8) for fixing on said opening (2) a water- and air-permeable sheet (7) closing said opening and ensuring said protection by covering the substrate (22),
- a station (9) for perforating (23) said sheet (7) at the centre of said opening (2), to adjustable dimensions given as a function of said plant (24),
- a system (4) for supplying and driving a plurality of containers (1) on the same line and passing beneath at least each of these stations (8, 9), beneath which the containers are successively stopped, by any timing means, for a sufficient period of time to allow each of the corresponding operations;
- a means (20) for evacuating said containers (1) thus protected which may then subsequently receive a plant (24), at any moment, in the hollow (21) then located beneath said sheet (7), and through said perforation (23).

7. Container protecting machine according to Claim 6, characterized in that it comprises a roll of web (25) of sheet (7) which is unwound by any means above said containers (1) and the drive means (4) along the same line and same direction of drive, and, after the perforating station (9), a station (10) for cutting out said sheet (7) to disconnect the parts then fixed on the containers from the supply web (25).

8. Container (1) used in nurseries and horticulture, presenting an upper opening (2) to fill it with any substrate (22) in which is made a hollow (21) adapted to receive a plant (24) and which is protected by a cover fixed on said opening (2), at least perforated at and in the vicinity of its centre and through which the stem 3 of the plant projects, characterized in that said cover is an air- and water-permeable sheet (7), perforated solely at and in the vicinity of the centre of the opening (2) of the container (1) so that the stem (3) of this plant is surrounded over the whole of its circumference and in continuous manner thereby.

9. Container according to Claim 8, characterized in that said sheet (7) is a non-woven textile material.

10. Container according to either one of Claims 7 and 8, characterized in that the container (1) and said sheet (7) are made of heat-meltable material and, as the melting point of the latter is lower than that of the container (1), said sheet is heat-sealed on the latter without deteriorating it.

## Patentansprüche

1. Verfahren zum Schützen eines Behälters (1), der in Baumschulen und Gärtnereien verwendet wird und eine obere Öffnung (2) für seine Befüllung mit Erde oder jedem anderen Substrat (22) aufweist, in der eine Ausnehmung (21) verwirklicht ist, die die Aufnahme einer Bepflanzung (24) ermöglicht und durch die Anordnung einer Abdeckung geschützt ist, dadurch gekennzeichnet, daß vor dem Einsetzen der Bepflanzung (24) und nach der Befüllung und nach der Verwirklichung der Ausnehmung:
- an der Öffnung (2) ein wasser- und luftdurchlässiger Stoff (7) fest angebracht wird, der diese Öffnung verschließt und den Schutz durch Abdecken des Substrats (22) gewährleistet,
- der Stoff (7) in der Mitte der Öffnung (2) in einer Größe, die in Abhängigkeit von der Bepflanzung einstellbar und gegeben ist, durchlocht (23) wird,
- im Anschluß an die vorangehenden Operationen ohne Unterbrechung die Bepflanzung (24) in die dann unter dem Stoff (7) befindliche Ausnehmung (21) und durch die Durchlochung (23) hindurch eingepflanzt wird.

2. Verfahren zum Schutz eines Behälters nach Anspruch 1, dadurch gekennzeichnet, daß der Stoff (7) vor der Befestigungsoperation von einer aufwickelten Bahn (25) abgegeben wird, die in einer gegebenen Richtung über dem Behälter (1) abgewickelt wird und die nach der Befestigungsoperation hinter dem Behälter (1) durchgeschnitten wird, um sie von diesem zu trennen.

3. Verfahren zum Schutz eines Behälters nach Anspruch 2, dadurch gekennzeichnet, daß mehrere der Behälter (1) durch ein beliebiges Mittel (4) unter der Stoffbahn (25) und in derselben Richtung wie deren Abwicklung hintereinander bewegt werden, um gemäß den gleichen aufeinanderfolgenden Operationen des Verfahrens für jeden Behälter wie im ersten Anspruch daran den Stoff zu befestigen, ihn zu durchlochen und durchzuschneiden, wobei dann sämtliche dieser Operationen gleichzeitig an mehreren Behältern stattfinden können und wobei dann sämtliche Behälter von einer Arbeitsstation zur nächsten im gleichen Zeitpunkt verschoben werden.

4. Verfahren nach irgendeinem der Ansprüche 1 bis 3, dadurch gekennzeichnet, daß der Stoff (7) am Behälter (1) durch Schmelzfixierung befestigt wird.

5. Verfahren nach Anspruch 4, dadurch gekennzeichnet, daß ein Behälter (1) und ein Stoff (7) aus wärmeschmelzbarem Material gewählt werden, wobei der Schmelzpunkt des Stoffs (7) niedriger als derjenige des Behälters ist, und daß der Stoff (7) an diesem durch Druck in Verbindung mit einer ausreichenden Erwärmung für die Schmelzfixierung befestigt wird.

6. Maschine zum Schutz eines Behälters (1), der in Baumschulen und Gärtnereien verwendet wird und eine obere Öffnung (2) für seine Befüllung mit Erde oder jedem anderen Substrat (22) aufweist, in der eine Ausnehmung (21) verwirklicht ist, die die Aufnahme einer Bepflanzung (24) ermöglicht und durch die Anordnung einer Abdeckung geschützt ist, dadurch gekennzeichnet, daß sie vor jeglicher Arbeitsstation für die Anordnung der Bepflanzung (24) wenigstens versehen ist mit
- einer Station (8) für die Befestigung eines wasser- und luftdurchlässigen Stoffs (7) an der Öffnung (2), wobei der Stoff die Öffnung verschließt und den Schutz durch Abdecken des Substrats (22) gewährleistet,
- einer Station (9) zum Durchlochen (23) des Stoffs (7) in der Mitte der Öffnung (2) in einer Größe, die in Abhängigkeit von der Bepflanzung (24) einstellbar und gegeben ist,
- einem System zur Zuführung und Bewegung (4) mehrerer Behälter (1) auf derselben Strecke, die wenigstens unter jeder dieser Stationen (8, 9) verläuft, unter welchen die Behälter nacheinander für eine ausreichende Dauer durch jedes bekannte Zeitgebermittel angehalten werden, um jede der entsprechenden Operationen zu ermöglichen,
- einem Mittel (20) zum Ausgeben der Behälter (1), die somit geschützt sind und im Anschluß daran ohne Unterbrechung in der dann unter dem Stoff (7) sich befindenden Ausnehmung (21) und durch die Durchlochung (23) hindurch eine Bepflanzung (24) aufnehmen können.

7. Maschine zum Schutz eines Behälters nach Anspruch 6, dadurch gekennzeichnet, daß sie eine Rolle (25) mit der Stoffbahn (7), die durch ein beliebiges Mittel oberhalb des Behälters (1) abgewickelt wird, ein Mittel (4) zum Bewegen längs derselben Strecke und derselben Antriebsrichtung sowie nach der Durchlochungsstation (9) eine Station zum Durchschneiden (10) des Stoffs (7) aufweist, um die dann auf den Behältern befestigten Teile der zugeführten Bahn (25) voneinander zu trennen.

8. Behälter (1), der in Baumschulen und Gärtnereien verwendet wird und eine obere Öffnung (2) für seine Befüllung mit jedem Substrat (22) aufweist, in der eine Ausnehmung (21) verwirklicht ist, die die Aufnahme einer Bepflanzung (24) ermöglicht, die durch eine feste Abdeckung auf der Öffnung (2) geschützt ist, die wenigstens in ihrer Mitte und in deren Umgebung durchlocht ist und durch die der Stamm (3) der Bepflanzung verläuft, dadurch gekennzeichnet, daß die Abdeckung ein luft- und wasserdurchlässiger Stoff (7) ist, der in der Mitte der Öffnung (2) des Behälters (1) und in deren Umgebung einfach durchlocht ist, derart, daß der Stamm (3) dieser Bepflanzung auf seiner gesamten Umfangslinie und auf ununterbrochene Weise von diesem umgeben ist.

9. Behälter nach Anspruch 8, dadurch gekennzeichnet, daß der Stoff (7) ein Vliesmaterial ist.

10. Behälter nach irgendeinem der Ansprüche 7 und 8, dadurch gekennzeichnet, daß der Behälter (1) und der Stoff (7) aus wärmeschmelzbarem Material sind, wobei der Schmelzpunkt des Stoffs (7) niedriger als derjenige des Behälters (1) ist und wobei der Stoff an diesem letzteren ohne dessen Beschädigung durch Schmelzfixierung befestigt wird.
